# EUROPEAN PATENT APPLICATION

(11) **EP 4 733 488 A1**
(43) Date of publication of application: **29.04.2026**
(21) Application number: 24825757.8
(22) Date of filing: 07.06.2024
(51) Int. Cl.: E02F 9/00, B60L 9/18, B60L 50/60, B60L 53/14, B60L 53/20, B60L 58/10, B60R 16/03, E02F 9/20, H02J 7/00

(54) **ELECTRIC SYSTEM FOR WORK MACHINE AND ELECTRIC WORK MACHINE**

(30) Priority: 23.06.2023 JP 2023103668
(71) Applicant: Hitachi Construction Machinery Co., Ltd., Tokyo 110-0015 (JP)
(72) Inventor: KURAMOCHI, Kazuyoshi, Tsuchiura-shi, Ibaraki 300-0013 (JP); TSURUGA, Yasutaka, Tsuchiura-shi, Ibaraki 300-0013 (JP)
(74) Representative: MERH-IP Matias Erny Reichl Hoffmann Patentanwälte PartG mbB
(86) International application number: PCT/JP2024/020918
(87) International publication number: WO 2024/262351

(57) **Abstract**

An electric system for a work machine is mounted on a work machine and includes: an electric motor configured to generate driving force for operating a work apparatus of the work machine; a storage battery that is chargeable and dischargeable; an inverter configured to convert first direct-current power supplied from the storage battery, into first alternating-current power; and a connector box in which a predetermined circuit module is installable. The connector box is configured to be couplable to each of a grid power supply, the inverter, and the electric motor. The inverter drives the electric motor by using at least one of power from the grid power supply and the first alternating-current power based on the predetermined circuit module mounted on the connector box.

## Description

### Technical Field

The present invention relates to an electric system for a work machine, and an electric work machine equipped with the electric system.

### Background Art

There is known a battery drive type electric work machine that includes a chargeable battery and an electric motor, drives the electric motor by using power supplied from a direct-current power supply such as the battery to operate a hydraulic pump, and supplies hydraulic oil from the hydraulic pump to a hydraulic actuator operating a work apparatus provided on the work machine (Patent Literature 1). Further, there is known an alternating-current power-supply drive type electric construction machine that drives an electric motor by using power supplied from a grid power supply such as a commercial power supply (Patent Literature 2).

### Citation List

### Patent Literature

Patent Literature 1: Japanese Patent Laid-Open No. 2008-189215
Patent Literature 2: Japanese Patent Laid-Open No. 2009-97270

### Summary of Invention

### Technical Problem

For the electric work machine, it is necessary to select the electric system corresponding to a work site, from the electric systems of different drive types as described above. However, in a case where the entire electric system is replaced every time the drive type of the electric work machine is changed to the electric system of the drive type necessary for the work site, it takes a time to perform replacement work every time.

The present invention is made in consideration of the above-described circumstances, and an object of the present invention is to provide an electric system for a work machine easily changeable in drive type, and an electric work machine.

### Means for Solving the Problem

An electric system for a work machine according to the present invention is mounted on a work machine and characterized by including: an electric motor configured to generate driving force for operating a work apparatus of the work machine; a storage battery that is chargeable and dischargeable; an inverter configured to convert first direct-current power supplied from the storage battery, into first alternating-current power; and a connector box in which a predetermined circuit module is installable, wherein the connector box is configured to be couplable to each of a grid power supply, the inverter, and the electric motor, and the inverter drives the electric motor by using at least one of power from the grid power supply and the first alternating-current power based on the predetermined circuit module mounted on the connector box.

An electric work machine according to the present invention is characterized by including: an electric motor; a storage battery that is chargeable and dischargeable; an inverter configured to convert first direct-current power supplied from the storage battery into first alternating-current power; a connector box in which a predetermined circuit module is installable; a hydraulic actuator configured to operate a work apparatus; and a hydraulic pump configured to supply hydraulic oil to the hydraulic actuator by using driving force of the electric motor, wherein the connector box is configured to be couplable to each of a grid power supply, the inverter, and the electric motor, the electric motor is driven by receiving at least one of power from the grid power supply and power from the inverter through the connector box, and the inverter switches contents of control operation for converting the first direct-current power into the first alternating-current power in association with the predetermined circuit module mounted on the connector box.

### Advantageous Effects of Invention

According to the present invention, it is possible to provide the electric system for the work machine easily changeable in drive type, and the electric work machine.

Further features relating to the present invention are made clear by description of the present specification and accompanying drawings. Further, issues, configurations, and effects other than those described above are made clear by the following description of an embodiment.

### Brief Description of Drawings

[Figure 1] Figure 1 is a schematic diagram of an electric work machine according to an embodiment of the present invention.
[Figure 2] Figure 2 is a schematic configuration diagram of an electric system for a work machine according to the embodiment of the present invention.
[Figure 3] Figure 3 is a circuit configuration diagram of a first circuit module installed in a connector box.
[Figure 4] Figure 4 is a circuit configuration diagram of a second circuit module installed in the connector box.

### Description of Embodiment

An embodiment of an electric system for a work machine and an electric work machine according to the present invention is described below with reference to drawings. In the present embodiment, a hydraulic excavator is adopted as the electric work machine; however, an application target of the present invention is not limited to the hydraulic excavator, and the present invention is applicable to other work machines.

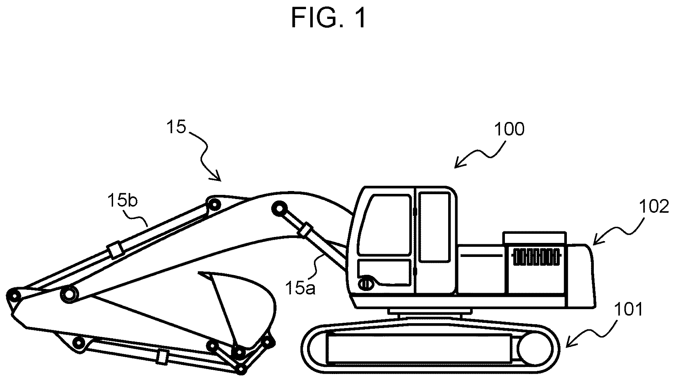

Figure 1 a schematic diagram of the electric work machine according to the embodiment of the present invention. An electric work machine (hydraulic excavator) 100 includes a lower traveling body 101 of a crawler type, an upper turning body 102 turnably mounted on the lower traveling body 101, and an articulated work apparatus 15 rotatably attached to the upper turning body 102. The work apparatus 15 is driven by hydraulic actuators (15a and 15b).

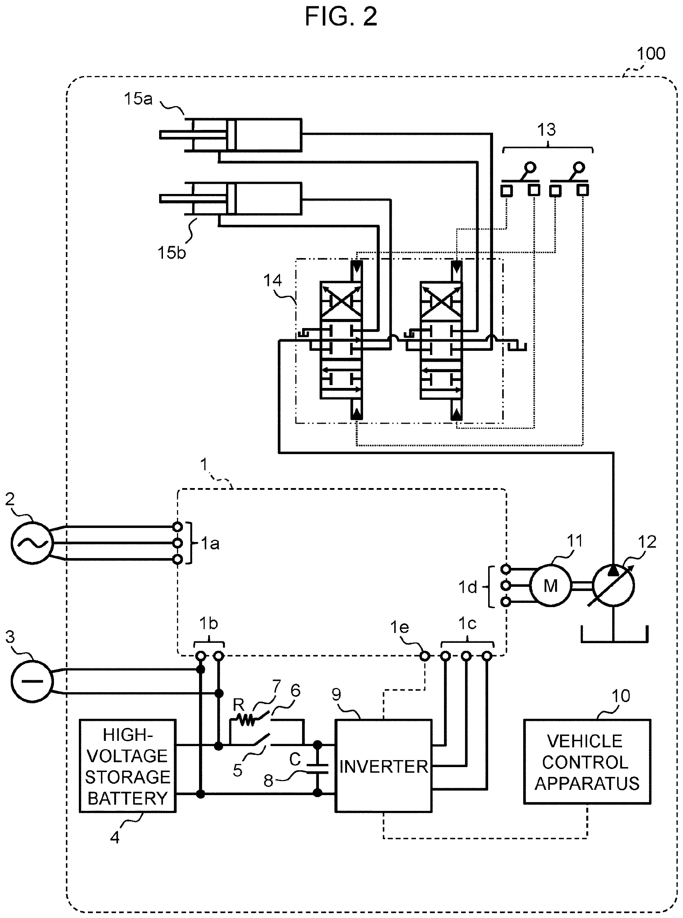

Figure 2 is a schematic configuration diagram of the electric system for the work machine mounted on the electric work machine according to the embodiment of the present invention. The electric work machine 100 according to the present embodiment is a work machine that can operate by using power supplied from each of a grid power supply 2 supplying alternating-current power such as a commercial power supply and a direct-current power supply 3 such as a battery and an external charging apparatus. The electric work machine 100 includes a connector box 1, a high-voltage storage battery 4, a main relay 5, a pre-charge relay 6, a pre-charge resistor 7, a smoothing capacitor 8, an inverter 9, a vehicle control apparatus 10, an electric motor 11, and a hydraulic pump 12. These components are mounted on the electric work machine 100 to configure an electric system for the electric work machine 100 (electric system for work machine).

The high-voltage storage battery 4 is a storage battery that is chargeable and dischargeable, and is configured using, for example, a lithium ion battery. The high-voltage storage battery 4 outputs direct-current power corresponding to its charging state to the inverter 9. The inverter 9 converts the direct-current power input from the high-voltage storage battery 4 into alternating-current power based on rotation information (such as rotor position and rotation speed) on the electric motor 11 transmitted from the vehicle control apparatus 10.

The main relay 5, the pre-charge relay 6, the pre-charge resistor 7, and the smoothing capacitor 8 are coupled between the high-voltage storage battery 4 and the inverter 9. The smoothing capacitor 8 suppresses variation of the input voltage of the inverter 9, and is coupled in parallel to the high-voltage storage battery 4 on an input side of the inverter 9.

When the electric work machine 100 is started up, the pre-charge relay 6 is first switched to on, and then the main relay 5 is switched to on. As a result, the pre-charge resistor 7 can suppress an inrush current flowing from the high-voltage storage battery 4 to the smoothing capacitor 8 at startup of the electric work machine 100.

The connector box 1 has a configuration in which a predetermined circuit module is installable. The connector box 1 includes connection terminals 1a (first connection terminal), 1b (second connection terminal), 1c (third connection terminal), 1d (fourth connection terminal), and 1e (fifth connection terminal). The connection terminal 1a is coupled to the grid power supply 2, and the connection terminal 1b is coupled between the high-voltage storage battery 4 and the input side of the inverter 9. The connection terminal 1c is coupled to an output side of the inverter 9, and the connection terminal 1d is coupled to the electric motor 11. The connection terminal 1e is coupled to a signal input terminal (not illustrated) provided in the inverter 9. The circuit module installed in the connector box 1 and the components of the electric system are electrically coupled through the connection terminals 1a to 1e.

A first circuit module 20 or a second circuit module 30 described below can be optionally installed in the connector box 1. The inverter 9 switches control operation for converting the alternating-current power to the direct-current power based on a type of the circuit module installed in the connector box 1. The details thereof are described below.

One or both of the alternating-current power output from the inverter 9 and the alternating-current power supplied from the grid power supply 2 are input to the electric motor 11 through the connector box 1. The electric motor 11 is rotationally driven by using the input alternating-current power to generate driving force, and outputs the driving force to the hydraulic pump 12. Details of the alternating-current power input to the electric motor 11 are described below.

The hydraulic pump 12 operates by using the driving force of the electric motor 11, and discharges hydraulic oil. The work apparatus 15 driven by the hydraulic actuators is installed in the electric work machine 100. The work apparatus 15 operates when the hydraulic oil discharged from the hydraulic pump 12 is supplied to the hydraulic actuators through a flow rate control valve 14. A state of the flow rate control valve 14 is switched based on an operation state (operation amount) of an operation lever 13. An operator of the electric work machine 100 can put the work apparatus 15 into an optional operation state by operating the operation lever 13. For example, in a case where the electric work machine 100 is a hydraulic excavator, the work apparatus 15 is a boom, an arm, a bucket, or the like.

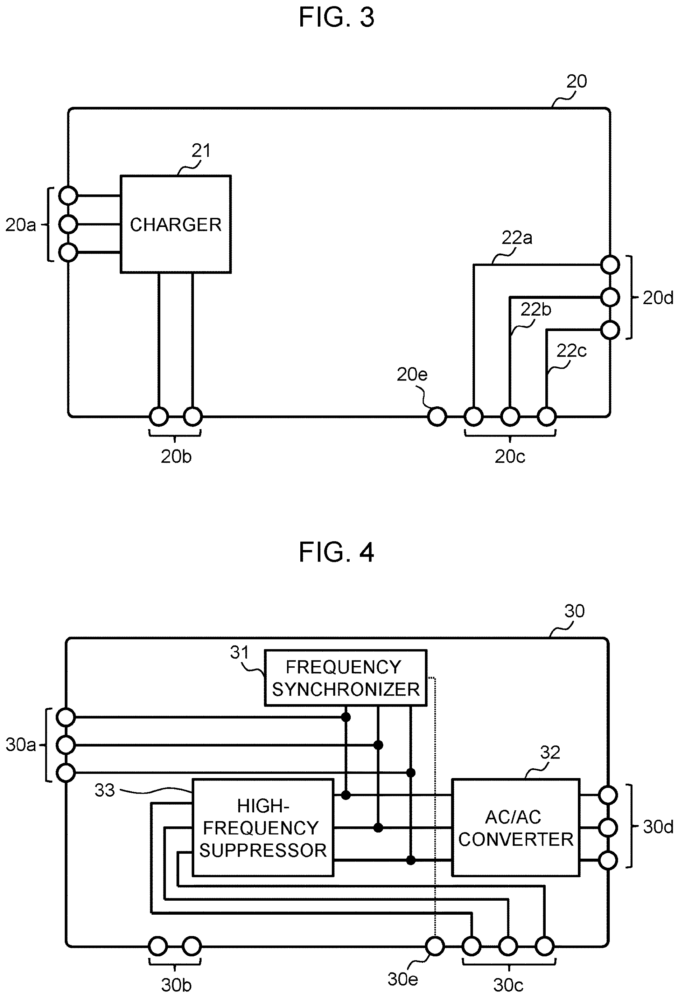

Next, a circuit configuration of the circuit module installed in the connector box 1 is described below with reference to Figure 3 and Figure 4.

Figure 3 is a diagram illustrating a circuit configuration of the first circuit module 20 (hereinafter, simply referred to as "circuit module 20") installed in the connector box 1. The circuit module 20 illustrated in Figure 3 is an example of the circuit module installed in the connector box 1 in a case where the electric work machine 100 is of a battery drive type, and includes connection terminals 20a, 20b, 20c, 20d, and 20e, a charger 21, and wirings 22a, 22b, and 22c.

When the circuit module 20 is installed in the connector box 1, the connection terminals 20a to 20e respectively come into contact with the connection terminals 1a to 1e of the connector box 1. As a result, the connection terminals 20a to 20e of the circuit module 20 and the connection terminals 1a to 1e of the connector box 1 are electrically coupled, respectively.

The charger 21 is coupled between the connection terminal 20a and the connection terminal 20b. When the circuit module 20 is installed in the connector box 1, and the connection terminals 20a and 20b are respectively electrically coupled to the connection terminals 1a and 1b of the connector box 1, the charger 21 is coupled between the connection terminal 1a and the connection terminal 1b. At this time, the charger 21 converts the alternating-current power supplied from the grid power supply 2 through the connection terminal 1a, into direct-current power. The direct-current power obtained by converting the alternating-current power of the grid power supply 2 by the charger 21 is output to the high-voltage storage battery 4 through the connection terminal 1b. Therefore, it is possible to charge the high-voltage storage battery 4 by using the alternating-current power supplied from the grid power supply 2.

As illustrated in Figure 2, the direct-current power supply 3 for quick charge is also coupled to the high-voltage storage battery 4. The high-voltage storage battery 4 can be quickly charged by using the direct-current power supplied from the direct-current power supply 3. However, since the high-voltage storage battery 4 can be charged by the alternating-current power supplied from the grid power supply 2 as described above, connection of the direct-current power supply 3 is not essential in the electric work machine 100.

The wirings 22a to 22c are coupled between the connection terminal 20c and the connection terminal 20d. When the circuit module 20 is installed in the connector box 1, and the connection terminals 20c and 20d are respectively electrically coupled to the connection terminals 1c and 1d of the connector box 1, the wirings 22a to 22c each couple the connection terminal 1c and the connection terminal 1d. As a result, the alternating-current power output from the inverter 9 is input to the electric motor 11 through the connection terminal 1c, the wirings 22a to 22c, and the connection terminal 1d.

At this time, nothing is coupled to the connection terminal 20e in the circuit module 20. Therefore, even when the circuit module 20 is installed in the connector box 1, and the connection terminal 20e is electrically coupled to the connection terminal 1e of the connector box 1, no signal is input to the above-described signal input terminal (not illustrated) of the inverter 9 coupled to the connection terminal 1e.

The inverter 9 determines that the electric work machine 100 is of a battery drive type by detecting that no signal is input to the signal input terminal. Thereafter, the inverter 9 controls a frequency and a phase of the alternating-current power output to the electric motor 11, based on the above-described rotation information on the electric motor 11 transmitted from the vehicle control apparatus 10. As a result, the electric motor 11 is driven to operate the hydraulic pump 12, which makes it possible to operate the work apparatus 15.

In the case where the circuit module 20 is installed in the connector box 1, it is possible to realize the battery drive type electric work machine 100 that operates the work apparatus 15 by using the direct-current power supplied from the high-voltage storage battery 4 in a manner described above.

Figure 4 is a diagram illustrating a circuit configuration of the second circuit module 30 (hereinafter, simply referred to as "circuit module 30") installed in the connector box 1. The circuit module 30 illustrated in Figure 4 is an example of a circuit module installed in the connector box 1 in a case where the electric work machine 100 is of an alternating-current power-supply drive type, and includes connection terminals 30a, 30b, 30c, 30d, and 30e, a frequency synchronizer 31, an AC/AC converter 32, and a high-frequency suppressor 33.

When the circuit module 30 is installed in the connector box 1, the connection terminals 30a to 30e respectively come into contact with the connection terminals 1a to 1e of the connector box 1. As a result, the connection terminals 30a to 30e of the circuit module 30 and the connection terminals 1a to 1e of the connector box 1 are electrically coupled, respectively.

The frequency synchronizer 31 is coupled to the connection terminals 30a and 30e. When the circuit module 30 is installed in the connector box 1, and the connection terminals 30a and 30e are respectively electrically coupled to the connection terminals 1a and 1e of the connector box 1, the frequency synchronizer 31 is coupled to the grid power supply 2 through the connection terminal 1a, and is coupled to the inverter 9 through the connection terminal 1e. At this time, the frequency synchronizer 31 detects a frequency and a phase of the grid power supply 2. Information on the frequency and the phase of the grid power supply 2 detected by the frequency synchronizer 31 is transmitted from the frequency synchronizer 31 to the above-described signal input terminal (not illustrated) of the inverter 9 through the connection terminal 1e.

The inverter 9 determines that the electric work machine 100 is of the alternating-current power-supply drive type by detecting that a signal is input to the signal input terminal. In a case where the power from the grid power supply 2 is not enough for the electric motor 11 to generate driving force necessary for the electric work machine 100, the inverter 9 generates the alternating-current power in response to an operation command from the vehicle control apparatus 10, and outputs the alternating-current power to the AC/AC converter 32 in order to cover shortage of the power. At this time, the inverter 9 controls the frequency and the phase of the alternating-current power to be output, based on the information on the frequency and the phase of the grid power supply 2 indicated by the signal input to the signal input terminal.

When the circuit module 30 is installed in the connector box 1, and the connection terminal 30c is electrically coupled to the connection terminal 1c of the connector box 1, the alternating-current power output from the inverter 9 is input to the circuit module 30 through the connection terminal 30c. The alternating-current power input to the circuit module 30 is suppressed in high-frequency component by the high-frequency suppressor 33, and resultant alternating-current power is input to the AC/AC converter 32. The high-frequency suppressor 33 is a high-frequency filter provided to prevent the high-frequency component superimposed on the output voltage of the inverter 9 from reaching the grid power supply 2. However, in a case where the high-frequency component is sufficiently suppressed in the output voltage of the inverter 9, the high-frequency suppressor 33 may not be provided in the circuit module 30.

The AC/AC converter 32 is coupled between the connection terminal 30a and the connection terminal 30d. When the circuit module 30 is installed in the connector box 1, and the connection terminals 30a and 30d are respectively electrically coupled to the connection terminals 1a and 1d of the connector box 1, the AC/AC converter 32 is coupled between the connection terminal 1a and the connection terminal 1d. As a result, the alternating-current power supplied from the grid power supply 2 through the connection terminal 1a is input to the AC/AC converter 32.

In addition, the connection terminal 30c is coupled to an input side of the AC/AC converter 32 through the high-frequency suppressor 33. When the inverter 9 outputs the alternating-current power in response to the command from the vehicle control apparatus 10 as described above, the alternating-current power is input to the circuit module 30 through the connection terminal 30c, and is input to the AC/AC converter 32 through the high-frequency suppressor 33.

In a case where the power necessary for driving the electric motor 11 can be covered by the grid power supply 2, the vehicle control apparatus 10 does not output an operation command to the inverter 9. Therefore, the inverter 9 does not output the alternating-current power. In this case, the AC/AC converter 32 converts the alternating-current power supplied from the grid power supply 2 through the connection terminal 1a, into the alternating-current power suitable for driving the electric motor 11, and outputs the alternating-current power to the electric motor 11 through the connection terminal 1d. As a result, the electric motor 11 is driven to operate the hydraulic pump 12, which makes it possible to operate the work apparatus 15.

In contrast, in a case where the power necessary for driving the electric motor 11 cannot be covered only by the grid power supply 2, the vehicle control apparatus 10 outputs an operation command to the inverter 9. In response to the operation command, the inverter 9 controls the frequency and the phase of the alternating-current power to be output, based on the information on the frequency and the phase of the grid power supply 2 indicated by the signal that is transmitted from the frequency synchronizer 31 and input to the signal input terminal, as described above. More specifically, the inverter 9 controls the frequency and the phase of the alternating-current power to be output so as to be respectively coincident with the frequency and the phase of the grid power supply 2. In this case, the AC/AC converter 32 converts alternating-current power that is obtained by combining the alternating-current power output from the inverter 9 and the alternating-current power supplied from the grid power supply 2 through the connection terminal 1a, into alternating-current power suitable for driving the electric motor 11, and outputs the alternating-current power to the electric motor 11 through the connection terminal 1d. As a result, the electric motor 11 is driven to operate the hydraulic pump 12, which makes it possible to operate the work apparatus 15.

In the case where the circuit module 30 is installed in the connector box 1, it is possible to realize the alternating-current power-supply drive type electric work machine 100 that operates the work apparatus 15 by using the alternating-current power supplied from the grid power supply 2 and the direct-current power supplied from the high-voltage storage battery 4 as necessary in a manner described above.

In the electric system mounted on the electric work machine 100 according to the present embodiment, by switching the type of the circuit module installed in the connector box 1 as described above, the two types of electric systems different in drive type can be easily changed. In other words, in the case where the circuit module 20 is installed in the connector box 1, the battery drive type electric system is configured in the electric work machine 100, whereas in the case where the circuit module 30 is installed in the connector box 1, the alternating-current power-supply drive type electric system can be configured in the electric work machine 100. Further, since the parts other than the connector box 1 can be made common, the plurality of types of electric work machines different in drive type can be realized without impairing a manufacturing cost and productivity.

The embodiment according to the present invention described above achieves the following operations and effects.
(1) An electric system mounted on an electric work machine 100 includes: an electric motor 11 configured to generate driving force for operating a work apparatus 15 provided on the electric work machine 100; a high-voltage storage battery 4 that is chargeable and dischargeable; an inverter 9 configured to convert direct-current power supplied from the high-voltage storage battery 4, into alternating-current power; and a connector box 1 in which a predetermined circuit module 20 or 30 is installable. The connector box 1 is configured to be couplable to each of a grid power supply 2, the inverter 9, and the electric motor 11. The inverter 9 drives the electric motor 11 by using at least one of power from the grid power supply 2 and the alternating-current power converted from the direct-current power supplied from the high-voltage storage battery 4 based on the circuit module 20 or 30 mounted on the connector box 1. This makes it possible to provide the electric system for the work machine easily changeable in drive type, and the electric work machine 100.
(2) The electric motor 11 is driven by receiving at least one of the power from the grid power supply 2 and the power from the inverter 9 through the circuit module 20 or 30 installed in the connector box 1. The inverter 9 switches control operation for converting the direct-current power supplied from the high-voltage storage battery 4 into the alternating-current power in association with the circuit module 20 or 30 mounted on the connector box 1. This makes it possible to suitably switch the control operation of the inverter 9 with change of the drive type.
(3) The connector box 1 includes a connection terminal 1a coupled to the grid power supply 2, a connection terminal 1b coupled between the high-voltage storage battery 4 and an input side of the inverter 9, a connection terminal 1c coupled to an output side of the inverter 9, and a connection terminal 1d coupled to the electric motor 11. By switching the type of the circuit module installed in the connector box 1, two types of electric systems different in drive type can be easily changed. Further, parts other than the circuit module installed in the connector box 1 can be made common, and a plurality of types of electric work machines 100 different in drive type can be realized without impairing a manufacturing cost and productivity.
(4) The connector box 1 includes a connection terminal 1e coupled to the inverter 9. The inverter 9 switches the control operation for converting the direct-current power supplied from the high-voltage storage battery 4 into the alternating-current power based on presence/absence of a signal input from the circuit module 20 or 30 through the connection terminal 1e. More specifically, in a case where the signal is not input through the connection terminal 1e, the inverter 9 controls a frequency and a phase of the alternating-current power based on rotation information on the electric motor 11. In a case where the signal is input through the connection terminal 1e, the inverter 9 controls the frequency and the phase of the alternating-current power based on information on a frequency and a phase of the grid power supply 2 indicated by the signal. Therefore, in each of the case where the electric work machine 100 is of the battery drive type and the case where the electric work machine 100 is of the alternating-current power-supply drive type, it is possible to automatically switch the control operation of the inverter 9 suitable for the circuit module mounted on the connector box.
(5) The circuit module installed in the connector box 1 includes a first circuit module 20 and a second circuit module 30. The first circuit module 20 includes a charger 21 coupled between the connection terminal 1a and the connection terminal 1b and configured to convert alternating-current power supplied from the grid power supply 2 into direct-current power and to charge the high-voltage storage battery 4, and wirings 22a to 22c each coupling the connection terminal 1c and the connection terminal 1d. The second circuit module 30 includes a frequency synchronizer 31 configured to detect a frequency and a phase of the grid power supply 2 and to transmit information on the detected frequency and the detected phase to the inverter 9, and an AC/AC converter 32 coupled between the connection terminal 1a and the connection terminal 1d and configured to convert the alternating-current power supplied from the grid power supply 2 or alternating-current power obtained by combining the alternating-current power output from the inverter 9 and the alternating current power supplied from the grid power supply 2, into alternating-current power for driving the electric motor 11. In a case where the first circuit module 20 is installed in the connector box 1, the electric motor 11 is driven by the alternating-current power output from the inverter 9. In a case where the second circuit module 30 is installed in the connector box 1, the electric motor 11 is driven by the alternating-current power output from the AC/AC converter 32. Therefore, by installing any of the first circuit module 20 and the second circuit module 30 in the connector box 1, each of the battery drive type electric system and the alternating-current power-supply drive type electric system can be realized.

In the above-described embodiment, the example in which the circuit module installed in the connector box 1 is any of the first circuit module 20 and the second circuit module 30 is described; however, another circuit module may be installed in the connector box 1. Depending on difference in type and specification of the electric system mounted on the electric work machine 100, various circuit modules can be selectively installed in the connector box 1.

### Reference Signs List

- 1: Connector box
- 2: Grid power supply
- 3: Direct-current power supply
- 4: High-voltage storage battery
- 5: Main relay
- 6: Pre-charge relay
- 7: Pre-charge resistor
- 8: Smoothing capacitor
- 9: Inverter
- 10: Vehicle control apparatus
- 11: Electric motor
- 12: Hydraulic pump
- 13: Operation lever
- 14: Flow rate control valve
- 15: Work apparatus
- 20: Circuit module
- 21: Charger
- 22a, 22b, 22c: Wiring
- 30: Circuit module
- 31: Frequency synchronizer
- 32: AC/AC converter
- 33: High-frequency suppressor
- 100: Electric work machine

## Claims

1. An electric system for a work machine to be mounted on a work machine, the electric system comprising:
an electric motor configured to generate driving force for operating a work apparatus of the work machine;
a storage battery that is chargeable and dischargeable;
an inverter configured to convert first direct-current power supplied from the storage battery, into first alternating-current power; and
a connector box in which a predetermined circuit module is installable, wherein
the connector box is configured to be couplable to each of a grid power supply, the inverter, and the electric motor, and
the inverter drives the electric motor by using at least one of power from the grid power supply and the first alternating-current power based on the predetermined circuit module mounted on the connector box.

2. The electric system for the work machine according to claim 1, wherein
the electric motor is driven by receiving at least one of the power from the grid power supply and the power from the inverter through the predetermined circuit module installed in the connector box, and
the inverter switches control operation for converting the first direct-current power into the first alternating-current power in association with the predetermined circuit module mounted on the connector box.

3. The electric system for the work machine according to claim 2, wherein the inverter switches the control operation for converting the first direct-current power into the first alternating-current power based on presence/absence of a signal input from the predetermined circuit module installed in the connector box.

4. The electric system for the work machine according to claim 2, wherein
the connector box includes a first connection terminal, a second connection terminal, a third connection terminal, and a fourth connection terminal,
the first connection terminal is coupled to the grid power supply,
the second connection terminal is coupled between the storage battery and an input side of the inverter,
the third connection terminal is coupled to an output side of the inverter, and
the fourth connection terminal is coupled to the electric motor.

5. The electric system for the work machine according to claim 4, wherein
the connector box includes a fifth connection terminal coupled to the inverter, and
the inverter switches the control operation for converting the first direct-current power into the first alternating-current power based on presence/absence of a signal input from the circuit module through the fifth connection terminal.

6. The electric system for the work machine according to claim 5, wherein
in a case where the signal is not input, the inverter controls a frequency and a phase of the first alternating-current power based on rotation information on the electric motor, and
in a case where the signal is input, the inverter controls the frequency and the phase of the first alternating-current power based on information on a frequency and a phase of the grid power supply indicated by the signal.

7. The electric system for the work machine according to claim 4, wherein
any of a first circuit module and a second circuit module is installed as the predetermined circuit module in the connector box,
the first circuit module includes a charger coupled between the first connection terminal and the second connection terminal and configured to convert second alternating-current power supplied from the grid power supply into second alternating-current power and to charge the storage battery, and a wiring coupling the third connection terminal and the fourth connection terminal,
the second circuit module includes a frequency synchronizer configured to detect a frequency and a phase of the grid power supply and to transmit information on the detected frequency and the detected phase to the inverter, and an alternating-current converter coupled between the first connection terminal and the fourth connection terminal and configured to convert the second alternating-current power supplied from the grid power supply or alternating-current power obtained by combining the first alternating-current power output from the inverter and the second alternating current power, into third alternating-current power for driving the electric motor,
in a case where the first circuit module is installed in the connector box, the electric motor is driven by the first alternating-current power output from the inverter, and
in a case where the second circuit module is installed in the connector box, the electric motor is driven by the third alternating-current power output from the alternating-current converter.

8. An electric work machine, comprising:
an electric motor;
a storage battery that is chargeable and dischargeable;
an inverter configured to convert first direct-current power supplied from the storage battery into first alternating-current power;
a connector box in which a predetermined circuit module is installable;
a hydraulic actuator configured to operate a work apparatus; and
a hydraulic pump configured to supply hydraulic oil to the hydraulic actuator by using driving force of the electric motor, wherein
the connector box is configured to be couplable to each of a grid power supply, the inverter, and the electric motor,
the electric motor is driven by receiving at least one of power from the grid power supply and power from the inverter through the connector box, and
the inverter switches contents of control operation for converting the first direct-current power into the first alternating-current power in association with the predetermined circuit module mounted on the connector box.
